(19) **Europäisches Patentamt**

**European Patent Office**

**Office européen des brevets**

(11) Veröffentlichungsnummer: **0 117 312**
**A1**

(12) # EUROPÄISCHE PATENTANMELDUNG

(21) Anmeldenummer: **83113060.4**

(22) Anmeldetag: **23.12.83**

(51) Int. Cl.³: **C 12 P 21/06, A 23 J 3/00**

(30) Priorität: **30.12.82 DE 3248568**

(43) Veröffentlichungstag der Anmeldung: **05.09.84**
**Patentblatt 84/36**

(84) Benannte Vertragsstaaten: **AT BE CH DE FR GB IT LI NL SE**

(71) Anmelder: **HOECHST AKTIENGESELLSCHAFT,**
**Postfach 80 03 20, D-6230 Frankfurt am Main 80 (DE)**

(72) Erfinder: **Merkenich, Karl, Dr., Am Rimbacher Weg 13,**
**D-6149 Fürth-Fahrenbach (DE)**
Erfinder: **Uhlmann, Gerd, Dr., Friedrich-Ebert-Strasse 37,**
**D-6800 Mannheim (DE)**
Erfinder: **Scheurer, Günther, Kirchgasse 61,**
**D-6733 Hassloch (DE)**
Erfinder: **Scharf, Udo, Dr., Altenhainer Strasse 20,**
**D-6233 Kelkheim (Taunus) (DE)**
Erfinder: **Schlingmann, Merten, Dr., Schneidhainer**
**Strasse 32a, D-6240 Königstein/Taunus (DE)**

(54) **Verfahren zur Herstellung eines funktionellen Bioproteins, das so erhältliche Bioprotein und diese enthaltende Zubereitungen.**

(57) Funktionelle Bioproteine werden aus mikrobiellen Eiweißisolaten durch Extraktion eines mikrobiellen Eiweißstoffes zur Verminderung seines Nukleinsäure- und Lipidgehalts und anschließende enzymatische Hydrolyse mit physiologischen Endoproteasen unter milden Bedingungen erhalten. Die Produkte eignen sich als Proteinkomponenten in eiweißreichen Lebensmitteln wie käseähnlichen Produkten, Kaffeeaufhellern oder Brotaufstrichen.

EP 0 117 312 A1

HOECHST AKTIENGESELLSCHAFT    HOE 82/F 275    0117312    Dr.KL/mü

Verfahren zur Herstellung eines funktionellen Bioproteins, das so erhältliche Bioprotein und dieses enthaltende Zubereitungen

Es wurde bereits vorgeschlagen, funktionelle Hydrolysate aus mikrobiellen Eiweißisolaten dadurch herzustellen, daß ein mikrobieller Eiweißstoff zunächst einer Extraktionsbehandlung zur Verminderung seines Nukleinsäure- und Lipidgehaltes und dann einer enzymatischen Hydrolyse durch eine oder mehrere Endoproteasen unterworfen wird (Deutsche Patentanmeldung P 31 43 947.0). Die Eiweißhydrolysate haben günstige lebensmitteltechnologische Eigenschaften und bewirken nicht nur eine ernährungsphysiologische Verbesserung von Nahrungsmitteln, sondern erleichtern auch deren technologische Verarbeitung, insbesondere wenn diese eine aufgelockerte Struktur haben sollen, gleichzeitig aber wasserlösliche und fettlösliche Bestandteile enthalten, wie es bei Desserts, Back- und Teigwaren und Imitationskäsen der Fall ist. Eine Fraktion dieser Eiweißhydrolysate zeigt eine besonders hohe Emulgierfähigkeit, wie sie für Wurstwaren, Käseprodukte, Konditoreiwaren, Cremes, aber auch Mayonnaise und Salatsaucen oder andere Fettzubereitungen gefordert werden.

Es wurde nun gefunden, daß spezielle Eiweißhydrolysate dieser Art nicht nur als Nahrungsmittelzusätze, die nur in untergeordneten Mengen in Lebensmitteln enthalten sind, dienen können, sondern vielmehr als Proteinkomponente in eiweißreichen Lebensmitteln, insbesondere in käseähnlichen Produkten.

Die Erfindung betrifft ein Verfahren zur Herstellung eines funktionellen Hydrolysats aus mikrobiellen Eiweißisolaten durch Extraktion eines mikrobiellen Eiweißstoffes zur Verminderung seines Nukleinsäure- und Lipidgehaltes und anschließende enzymatische Hydrolyse durch Endoproteasen, das dadurch gekennzeichnet ist, daß die Hydrolyse mit physiologischen Proteasen unter milden Bedingungen erfolgt, die so erhältlichen funktionellen Eiweißhydrolysate sowie Zubereitungen, die diese funktionellen Eiweißhydrolysate enthalten. Bevorzugte Ausgestaltungen der Erfindung werden im folgenden näher erläutert.

Als Ausgangsmaterial eignen sich alle eiweißreichen mikrobiellen Zellmassen. Besonders vorteilhaft sind die nach der deutschen Patentschrift 2 633 451 durch Züchtung von Bakterien des Stammes Methylomonas clara ATCC 31226 in einem Methanol enthaltenden Nährmedium gewonnenen Bakterienzellmassen, aus denen nach dem Verfahren der deutschen Auslegeschrift 2 633 666 durch Extraktion mit einem weitgehend oder völlig wasserfreien Gemisch aus Ammoniak und einem polaren Lösemittel aus der Reihe der niederen Alkanole, niederen Glykole oder der Methyl- oder Ethylether eines niederen Glykols, insbesondere Methanol, die Lipide und in einem anschließenden Schritt durch Extraktion mit Wasser die Nukleinsäuren weitestgehend entfernt wurden.

Als physiologische Endoproteasen werden Trypsin, Chymotrypsin und deren Mischungen bevorzugt. Besonders bevorzugt wird Trypsin. Diese Endoproteasen führen zu einem geschmacklich einwandfreien Produkt mit wertvollen physiologischen und technologischen Eigenschaften. Der Einsatz "aggressiver" Enzyme ist möglich, erfordert aber die Einhaltung und Überwachung besonders angepaßter Bedingungen, was aufgrund des erhöhten Aufwands im allgemeinen nicht vorteilhaft ist. Enzyme wie Pepsin, die im stark sauren Bereich spalten, führen bei der später erforderlichen Neutralisation zu einem erhöhten Salzanfall, was von Nachteil sein kann.

Die Hydrolysebedingungen richten sich selbstverständlich nach dem eingesetzten Enzym. Im Falle der bevorzugten Proteasen erfolgt die Hydrolyse im pH-Bereich von 7 bis 8, insbesondere bei pH 7,5, in einem Temperaturbereich von 40 bis 50, insbesondere 45°C, im Verlauf von 5 bis 30, insbesondere etwa 20 Minuten. Auf einen Gewichtsteil Pro-

- 3 -

0117312

tease werden im allgemeinen 500 bis 2000 Gewichtsteile, insbesondere etwa 1000 Gewichtsteile, Substrat eingesetzt.

Wenn die Hydrolyse das gewünschte Ausmaß erreicht hat, wird die Reaktion abgebrochen, zweckmäßig durch Inaktivierung des Enzyms. Diese erfolgt vorteilhaft durch Erhitzen des Ansatzes auf 70 bis 90, insbesondere 80°C, was wenige Minuten erfordert.

Das so erhaltene funktionelle Protein kann getrocknet werden, beispielsweise in einem Sprühtrockner, und ist dann lagerfähig. Beim Einsatz dieses getrockneten Materials wird es zunächst resolvatisiert, was zweckmäßig unter leichtem Vakuum erfolgt, um Lufteinschlüsse zu verhindern.

Vorteilhaft wird jedoch das Eiweißhydrolysat direkt zu der entsprechenden Zubereitung verarbeitet. So kann die Hydrolyse beispielsweise in einem Käseschmelzkessel erfolgen, worauf das Produkt mit den üblichen Zusätzen wie Schmelzsalzen unmittelbar weiterverarbeit wird.

Es ist bereits eine Reihe von Verfahren bekannt, bei denen in Schmelzkäse und ähnlichen Erzeugnissen der zum Einsatz kommende Käseanteil ganz oder teilweise durch technologisch leichte handhabbare und kostengünstigere Proteine substituiert wird. Beispiele hierfür sind ungereiftes Milchprotein (britische Patentschrift 1 601 672, deutsche Offenlegungsschrift 28 34 093), Caseinat (deutsche Offenlegungsschrift 2 411 913, US-Patentschrift 4 232 050) oder Produkte aus Molke (US-Patentschrift 4 166 142), die teilweise im Gemisch mit pflanzlichen Produkten wie Weizengluten (US-Patenschrift 3 806 606), Sojaeiweiß (US-Patentschrift 4 080 477) oder Erdnußprotein (Food Technology, Juli 1979, 88 - 93) eingesetzt wurden.

Aus der Deutschen Offenlegungsschrift 2 651 464 ist es bekannt, ein mikrobielles Protein, ein Natrium-, Calciumoder Magnesiumsalz, ein Acetylierungsprodukt oder einen Phosphat-Komplex davon oder ein hitzedenaturiertes mikrobielles Protein als Proteinkomponente in Nahrungsmitteln wie
Backwaren, Fleischwaren, Getränken, fermentierten Molkerei-
Ersatzprodukten oder Desserts einzusetzen.

Insbesondere bei Eiweißisolaten aus Bakterien ist es aus
gesundheitlichen und Geschmacksgründen wichtig, den Gehalt
an Nukleinsäuren und Lipiden zu verringern. Derartige Isolate sind jedoch in technologischer Hinsicht nicht ohne
weiteres für Lebensmittel einzusetzen.

Versucht man beispielsweise, ein nach der deutschen Auslegeschrift 2 633 666 hergestelltes Proteinisolat für
ein schmelzkäseähnliches Erzeugnis einzusetzen, so stößt
man auf Schwierigkeiten: Selbst bei Verwendung hoher
Anteile an Schmelzsalzen wird keine homogene, glatte
Schmelzmasse erhalten, was sich nicht nur in einer krümeligen und mehligen Struktur bemerkbar macht, sondern auch
im Mund ein körnige, grieß- bis sandartige Empfindung hinterläßt.

Überraschenderweise eignen sich jedoch die erfindungsgemäßen
funktionellen Bioproteine hervorragend als Proteinkomponenten für Käse-Substitutionsprodukte. Beim Schmelzen mit
üblichen Schmelzsalzen, wie sie in den US-Patentschriften
4 080 477 und 4 166 142, den deutschen Offenlegungsschriften 2 411 913 und 2 834 093 sowie in der britischen Patentschrift 1 601 672 beschrieben sind, wird ein guter Eiweißaufschluß, eine gute Emulgierung und gute Textur erreicht,
wobei hochpolymere Polyphosphate bevorzugt sind. Eine Wiederschmelzbarkeit wird durch Zitrat-Polyphosphat-Mischungen
erzielt.

Bei der Herstellung von schmelzkäseähnlichen Erzeugnissen
können andere Proteinträger wie Käse oder die genannten

0117312

Substitutionsprodukte zugesetzt werden. Als Fettkomponente kommen Butterfett und Pflanzenfette in Betracht. Wasser und Hilfsmittel wie Emulgatoren, Farbstoffe und Geschmacksstoffe können in üblicher Weise zugesetzt werden.

Die Erzeugnisse können in üblichen Maschinen (z.B. Pfannenschmelzmaschinen, Schmelzcutter, Laydown-Cooker) verarbeitet und in üblicher Weise abgefüllt und verpackt werden, wie beispielsweise streichfähig in Aluminiumfolien, Tuben, Würsten, Gläsern oder Plastikbechern bzw. schnittfest zu Blöcken. Außerdem können sie zu Scheiben in bekannten Schlauch-, Band- oder Walzenverfahren verarbeitet werden.

Weiterhin können mit den erfindungsgemäßen funktionellen Bioproteinen auch andere Zubereitungen hergestellt werden, wie beispielsweise Brotaufstriche, Kaffeeaufheller, Saucen oder dergleichen.

In den folgenden Beispielen beziehen sich Prozentangaben auf das Gewicht, wenn nichts anderes angegeben ist. Die Charakterisierung der Zusatzstoffe erfolgt nach der Zusatzstoff-Zulassungsverordnung (ZZulV, BGBl. T.I, 1981, 1633).

Beispiel 1

Herstellung eines erfindungsgemäßen funktionellen Bioproteins.

Als Ausgangsmaterial dient eine Bakterienzellmasse gemäß der deutschen Patentschrift 2 633 451, Beispiel 2, deren Nukleinsäure- und Lipidgehalt nach dem Verfahren der deutschen Auslegeschrift 2 633 666, Beispiel 1, vermindert wird.

10 kg dieses Proteinisolats werden in 65 1 Wasser suspendiert und der pH-Wert der Suspension durch Zugabe von 4 N Natronlauge auf 7,5 eingestellt.

Die Suspension wird unter Rühren auf 45°C vorinkubiert, dann mit 20 g Trypsin PTN 3.0 S (Fa. Novo) versetzt und 20 min unter Rühren bei 45°C inkubiert. Zur Inaktivierung des Enzyms wird der Ansatz 10 min auf 80°C erhitzt und die Suspension sprühgetrocknet. Der pH-Wert des Produktes fällt auf Grund der Hydrolysetätigkeit des Enzyms auf Werte zwischen 6,5 und 7,0.

Beispiel 2

Herstellung von Schmelzkäsescheiben-Analoga mit 50 % Fett in der Trockenmasse (i.T.) und 56 % Trockenmasse.
Folgende Rezeptur wird verwendet:

15,000 kg Labkasein
 5,000 kg sprühgetrocknetes aufgeschlossenes Bioproteinisolat
          gemäß Beispiel 1
30,000 kg Butter
 3,000 kg Magermilchpulver
 0,600 kg Kochsalz
 1,350 kg handelsübliche Schmelzsalzmischung auf Basis von
          Natriumpolyphosphaten (E 450c), Natriumcitraten
          (E 331), Kaliummonophosphaten (E 340), Natriumdiphosphaten (E 450 a), Natriumtriphosphaten
          (E 450 b) und Natriummonophosphaten (E 339)
 0,050 kg Zitronensäure
 0,200 kg Käsefarbe
32,000 kg Wasser einschließlich Kondensat

Die Temperatur in der mit einem Rührwerk versehenen Schmelzapparatur wird innerhalb von 7 min bei 120 UpM auf 80°C erhöht.

Das so hergestellte Produkt ist charakterisiert durch ein Bioproteinisolat-Labkasein-Verhältnis von 1 : 3.
Die Scheiben zeigen gute elastische Eigenschaften und gute Toastfähigkeit.

## Beispiel 3

Beispiel 2 wird mit der Abwandlung wiederholt, daß an Stelle der 30,000 kg Butter 25,000 kg hydriertes Pflanzenfett eingesetzt werden und die Wassermenge auf 37,000 kg erhöht wird. Man erhält ein Produkt mit den gleichen Eigenschaften.

## Beispiel 4

Herstellung eines Produktes wie in Beispiel 2, aber unter Verwendung folgender Rezeptur:

```
 9,750 kg Labkasein
 9,750 kg sprühgetrocknetes aufgeschlossenes Bioproteinisolat
          gemäß Beispiel 1
30,000 kg Butter
 3,000 kg Magermilchpulver
 0,600 kg Kochsalz
 1,350 kg Schmelzsalz (wie in Beispiel 2)
 0,050 kg Zitronensäure
 0,200 kg Käsefarbe
32,000 kg Wasser einschließlich Kondensat
```

Die Erhitzung erfolgt wie unter Beispiel 2 beschrieben.

Das so hergestellte Produkt ist charakterisiert durch ein Bioproteinisolat-Labkasein-Verhältnis von 1 : 1.

Die Scheiben zeigen gute elastische Eigenschaftn mit mittlerer bis guter Toastfähigkeit.

Beispiel 5

Beispiel 4 wird wiederholt mit der Abwandlung, daß an Stelle der 30,000 kg Butter 25,000 kg hydriertes Pflanzenfett eingesetzt werden, wobei die Wassermenge auf 37,000 kg erhöht wurde. Man erhält ein Produkt mit den gleichen Eigenschaften wie nach Beispiel 4.

Beispiel 6

Herstellung von streichfähigen Schmelzkäse-Analoga mit 40 % Fett i.T. und 41 % Trockenmasse.
Folgende Rezeptur wird verwendet:

```
 3,000 kg  Labkasein
 9,000 kg  sprühgetrocknetes aufgeschlossenes Bioproteinisolat
               gemäß Beispiel 1
12,000 kg  Butter
 2,000 kg  Magermilchpulver
 0,400 kg  Kochsalz
 1,300 kg  handelsübliches Schmelzsalz auf Basis von Natriumpolyphosphaten ( E 450c)
 2,400 kg  Vorschmelzware
33,500 kg  Wasser einschließlich Kondensat
```

Die Temperatur in der mit einem Rührwerk versehenen Schmelzapparatur wird innerhalb von 15 min bei 120 UpM auf 92°C erhöht.

Das so hergestellte Produkt ist charakterisiert durch ein Bioproteinisolat-Labkasein-Verhältnis von 3 : 1.

Die abgekühlte Schmelze ist gut streichfähig und zeigt ein akzeptables käsegemäßes Verhalten im Mund.

Beispiel 7

Beispiel 6 wird mit der Abwandlung wiederholt, daß an Stelle der 12,000 kg Butter 9,6 kg hydriertes Pflanzenfett eingesetzt werden, wobei die Wassermenge auf 35,900 kg erhöht wird. Man erhält ein Produkt mit den gleichen Eigenschaften wie nach Beispiel 6.


Beispiel 8


Herstellung von streichfähigen Schmelzkäse-Analoga mit 60 % Fett i.T. und 47 % Trockenmasse.
Folgende Rezeptur wird verwendet:

 3,000 kg Labkasein
 9,000 kg sprühgetrocknetes aufgeschlossenes Bioproteinisolat
          gemäß Beispiel 1
 2,000 kg Magermilchpulver
28,000 kg Butter
 1,500 kg Schmelzsalz (wie in Beispiel 6)
 3,600 kg Vorschmelzware
37,000 kg Wasser einschließlich Kondensat

Die Erhitzung erfolgt wie unter Beispiel 6 beschrieben.


Das so hergestellte Produkt ist charakterisiert durch ein Bioproteinisolat-Labkasein-Verhältnis von 3 : 1.


Die abgekühlte Schmelze ist gut streichfähig und zeigt ein angenehmes käsegemäßes Verhalten im Mund.


Beispiel 9


Arbeitet man nach Beispiel 8, setzt jedoch an Stelle der 28,000 kg Butter 22,400 kg hydriertes Pflanzenfett ein und erhöht die Wassermenge auf 43,400 kg, so erhält man ein Produkt mit den gleichen Eigenschaften wie nach Beispiel 8.


Beispiel 10


Herstellung eines eiweißreichen Brotaufstrichs mit Erdnußgeschmack mit 25 % Fett i.T. und 33 % Trockenmasse.

Folgende Rezeptur wird verwendet:

  6,000 kg Magermilchpulver

  6,000 kg sprühgetrocknetes aufgeschlossenes Bioproteinisolat
            gemäß Beispiel 1

  0,400 kg Zucker

12,000 kg Erdnußbutter

  0,430 kg handelsübliche Schmelzsalzmischung auf Basis von
            Natriumpolyphosphaten (E 450c), Natriummonophosphaten (E 339), Natriumdiphosphaten (E 450a) und
            Natriumtriphosphaten ( E 450b)

  0,05 kg Carboxymethylcellulose ( E 466)

49,000 kg Wasser einschließlich Kondensat

Die Erhitzung erfolgt wie unter Beispiel 6 beschrieben.

Die abgekühlte Schmelze zeigt gute Konsistenz und ist im Vergleich zu Erdnußbutter auch im kalten Zustand gut streichfähig. Das Produkt besitzt angenehmen Erdnußgeschmack.

## Beispiel 11

Herstellung eines eiweißreichen Brotaufstrichs mit Erdnußgeschmack mit 45 % Fett i.T. und 44 % Trockenmasse.

Folgende Rezeptur wird verwendet:

  3,000 kg Magermilchpulver

  3,000 kg sprühgetrocknetes aufgeschlossenes Bioproteinisolat
            gemäß Beispiel 1

  6,000 kg Butter

  0,200 kg Zucker

  6,000 kg Erdnußbutter

  0,220 kg Schmelzsalz (wie in Beispiel 10)

  0,020 kg Carboxymethylcellulose (E 466)

20,600 kg Wasser einschließlich Kondensat

0117312

Die Erhitzung erfolgt wie unter Beispiel 6 beschrieben.

Die abgekühlte Schmelze zeigt gute Konsistenz und ist im Vergleich zu Erdnußbutter auch im kalten Zustand gut streichfähig. Das Produkt besitzt angenehmen Erdnußgeschmack.

Beispiel 12

Verfährt man gemäß Beispiel 11, nimmt jedoch an Stelle der 6,000 kg Butter 4,800 kg hydriertes Pflanzenfett und an Stelle der 20,600 kg Wasser 21,800 kg, so erhält man ein Produkt, das in seinen Eigenschaften dem des Beispiels 11 entspricht.

Beispiel 13

Herstellung eines Kaffeaufhellers

Folgende Rezeptur wird verwendet:

800 g Wasser
70 g Pflanzenfett
120 g Stärkesirup
60 g sprühgetrocknetes aufgeschlossenes Bioproteinisolat
gemäß Beispiel 1
8 g Phosphat-Stabilisator-Mischung
bestehend aus Kaliummonophosphaten (E 340), Natriumpolyphosphaten ( E 450c) und
Natriummonophosphaten (E 339).

Die Phosphat-Stabilisator-Mischung wird im Wasser gelöst, dann die übrigen Bestandteile zugegeben, die Mischung erwärmt, homogenisiert und sprühgetrocknet.

Das Produkt verteilt sich gut in Kaffee und zeigt gute aufhellende Eigenschaften.

Patentansprüche

1. Verfahren zur Herstellung eines funktionellen Hydrolysats aus mikrobiellen Eiweißisolaten durch Extraktion eines mikrobiellen Eiweißstoffes zur Verminderung seines Nukleinsäure- und Lipidgehaltes und anschließende enzymatische Hydrolyse durch Endoproteasen, dadurch gekennzeichnet, daß die Hydrolyse mit physiologischen Proteasen unter milden Bedingungen erfolgt.

2. Verfahren nach Anspruch 1, dadurch gekennzeichnet, daß als Endoprotease Trypsin, Chymotrypsin oder deren Mischungen eingesetzt werden.

3. Verfahren nach Anspruch 1 und 2, dadurch gekennzeichnet, daß als Endoprotease Trypsin eingesetzt wird.

4. Verfahren nach einem oder mehreren der Ansprüche 1 bis 3, dadurch gekennzeichnet, daß die Hydrolyse im pH-Bereich von 7 bis 8 erfolgt.

5. Verfahren nach einem oder mehreren der Ansprüche 1 bis 4, dadurch gekennzeichnet, daß die Hydrolyse in einem Temperaturbereich von 40 bis 50°C erfolgt.

6. Verfahren nach einem oder mehreren der Ansprüche 1 bis 5, dadurch gekennzeichnet, daß die Hydrolyse 5 bis 30 Minuten dauert.

7. Funktionelles Bioprotein, erhältlich nach einem oder mehreren der Ansprüche 1 bis 6.

8. Proteinhaltige Zubereitung, enthaltend ein funktionelles Bioprotein nach Anspruch 7.

9. Käseähnliches Produkt, enthaltend ein funktionelles Bioprotein gemäß Anspruch 7.

10. Brotaufstrich, Kaffeeaufheller oder Sauce, enthaltend ein funktionelles Bioprotein gemäß Anspruch 7.

Patentansprüche für Österreich:

1. Verfahren zur Herstellung eines funktionellen Hydrolysats aus mikrobiellen Eiweißisolaten durch Extraktion eines mikrobiellen Eiweißstoffes zur Verminderung seines Nukleinsäure- und Lipidgehaltes und anschließende enzymatische Hydrolyse durch Endoproteasen, dadurch gekennzeichnet, daß die Hydrolyse mit physiologischen Proteasen unter milden Bedingungen erfolgt.

2. Verfahren nach Anspruch 1, dadurch gekennzeichnet, daß als Endoprotease Trypsin, Chymotrypsin oder deren Mischungen eingesetzt werden.

3. Verfahren nach Anspruch 1 und 2, dadurch gekennzeichnet, daß als Endoprotease Trypsin eingesetzt wird.

4. Verfahren nach einem oder mehreren der Ansprüche 1 bis 3, dadurch gekennzeichnet, daß die Hydrolyse im pH-Bereich von 7 bis 8 erfolgt.

5. Verfahren nach einem oder mehreren der Ansprüche 1 bis 4, dadurch gekennzeichnet, daß die Hydrolyse in einem Temperaturbereich von 40 bis 50°C erfolgt.

6. Verfahren nach einem oder mehreren der Ansprüche 1 bis 5, dadurch gekennzeichnet, daß die Hydrolyse 5 bis 30 Minuten dauert.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,A | EP-A-0 079 023 (HOECHST) <br> * Ansprüche 4, 5 * & DE-A1-3 143 947 (Kat. D) <br><br> ----- | 1-3 | C 12 P 21/06 <br> A 23 J 3/00 |

RECHERCHIERTE SACHGEBIETE (Int. Cl. 3)

A 23 J 3/00
C 12 P 21/06

Der vorliegende Recherchenbericht wurde für alle Patentansprüche erstellt.

| Recherchenort | Abschlußdatum der Recherche | Prüfer |
|---|---|---|
| BERLIN | 04-04-1984 | KNAACK M |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82